# EUROPÄISCHE PATENTANMELDUNG

(11) **EP 0 772 129 A2**
(43) Veröffentlichungstag der Anmeldung: **07.05.1997**
(21) Anmeldenummer: 96440093.1
(22) Anmeldetag: 25.10.1996
(51) Int. Cl.: G06F 12/08

(54) **Rechner**

(30) Priorität: 26.10.1995 DE 19539746
(71) Anmelder: ALCATEL ALSTHOM COMPAGNIE GENERALE D'ELECTRICITE, 75008 Paris (FR)
(72) Erfinder: Kopp, Dieter, 71282 Hemmingen (DE)
(74) Vertreter: Knecht, Ulrich Karl, Dipl.-Ing.

(57) **Zusammenfassung**

Ein Rechner soll bei gleichzeitig kleiner werdender räumlicher Ausdehnung einen gleich großen Speicher zur Verfügung stellen und einen reduzierten Spannungsverbrauch aufweisen.

Ersetze den Arbeitsspeicher und den Hauptspeicher durch wenigstens einen nichtflüchtigen, löschbaren Halbleiterspeicher (NAND-EEprom) und durch eine Steuerung, die den Datenaustausch zwischen zentraler Prozessoreinheit und Halbleiterspeicher steuert.

## Beschreibung

Die Erfindung betrifft einen Rechner, der mit einer zentralen Prozessoreinheit zum Verarbeiten von Daten ausgestattet ist, und desweiteren einen Cache-Speicher zum Zwischenspeichern der Daten und eine Cache-Steuerung zur Steuerung der Datenein- und ausgabe enthält.

Bekannte Rechner zur Verarbeitung von Daten setzen sich aus einem Rechenwerk, einer sogenannten zentralen Prozessoreinheit, und entsprechendem Speicher zusammen. Hierbei gibt es einen sogenannten Zentralspeicher oder Primärspeicher, einen Arbeitsspeicher und einen Speicher zur Speicherung der zuletzt ausgeführten Operation, einen sogenannten Cache-Speicher. Der Cache-Speicher dient zum Aufbewahren der Daten, die in der zentralen Prozessoreinheit verarbeitet werden. Diesem Cache-Speicher ist eine entsprechende Steuerung zugeordnet. Diese steuert die Datenein- und ausgabe des Cache-Speichers. Der Hauptspeicher ist im Allgemeinen ein Plattenspeicher, der eine Speicherplatzgröße von mehreren Megabyte aufweist. Zwischen Hauptspeicher und der zentralen Prozessoreinheit befindet sich der Arbeitsspeicher. Bei der Verarbeitung von Daten in dem Rechner werden Daten aus dem Zentralspeicher in den Arbeitsspeicher geladen, ebenfalls werden Programme zur Ausführung der Datenverarbeitung in den Arbeitsspeicher geladen. Nach der Bearbeitung von Programmen und Daten werden diese Daten wieder in den Zentralspeicher zurückgespeichert und dort fest eingeschrieben (aus: LEXIKON der Datenverarbeitung; von: Hagenbucher et al.; Verlag moderne industrie (mi); 5te Auflage)

Bei dem in der Stand der Technik beschriebenen Rechner sind somit der Zentralspeicher, der im folgenden als Hauptspeicher bezeichnet wird, und der Arbeitsspeicher getrennt voneinander aufgebaut und benötigen jeweils eine eigene Spannungsversorgung und einen getrennt voneinander vorgesehenen Platz zum Aufbau dieses Speichers. Bei der weiteren Entwicklung der neuen Rechnergenerationen, bei denen auf in der räumlichen Ausdehnung immer kleinere Rechner hingearbeitet wird und bei denen diese immer kompakter und handlicher werden, besteht der Bedarf nach immer platzsparenderen Rechnern. Ebenso ist insbesondere bei Laptops oder bei der neueren Generation der Palmtops ein immer kleiner werdender Speicherplatz für zumindest gleich große Speicher wichtig.

Die Aufgabe der vorliegenden Erfindung ist es einen Rechner mit einer reduzierten räumlichen Ausdehnung zu schaffen, bei gleichzeitig gleichbleibend großer Speichermöglichkeit.

Dies wird erfindungsgemäß gelöst durch die Lehre des Patentanspruchs 1.

Ein Vorteil der vorliegenden Erfindung ist, daß auch eine hohe Datentransferrate erreicht werden kann. Dies ist insofern relevant, als daß neue Mikroprozessorgenerationen immer höhere Taktfrequenzen zur Verfügung stellen und dabei die Speicher zu langsam sind, als daß sie mit diesen hohen Taktfrequenzen mithalten können. So ist derzeit ohne weiteres eine Taktfrequenz zwischen 100 MHz und 125 MHz von herkömmlichen Mikroprozessoren erreichbar. Dieser Entwicklung ist kein Ende gesetzt und führt zu immer höheren Taktfrequenzen.

Ein weiterer Vorteil bei der Verwendung des erfindungsgemäßen Rechners ist, daß bei einem plötzlichen Spannungsausfall ein höherer Anteil an Daten erhalten bleibt. Dieser Anteil der Daten ist größer, als dies bei einem konventionellen Rechner möglich ist, denn bei solchen Rechnern sind alle Daten, die in dem Arbeitsspeicher gespeichert sind, verloren. Ein Anwendungsgebiet für Rechner, die diese Vorteile aufweisen, findet man in dem Bereich der Nebenstellentechnik. Bei Nebenstellenanlagen ist die Anforderung sehr hoch, einen möglichst geringen Datenverlust zu haben, wenn ein Spannungsausfall stattfindet.

Weitere vorteilhafte Ausgestaltungen der Erfindung sind den Unteransprüchen 2 bis 5 zu entnehmen.

Im folgenden wird die Erfindung anhand von Ausführungsbeispielen mittels der Figuren näher erläutert.

Folgende Figuren zeigen:
- Fig. 1: schematische Darstellung eines erfindungsgemäßen Rechners,
- Fig. 2: vorteilhafte Ausführungsform eines erfindungsgemäßen Rechners mit mehreren Halbleiterspeichern,
- Fig. 3: Darstellung einer möglichen Verschaltung eines Ausführungsbeispiels.

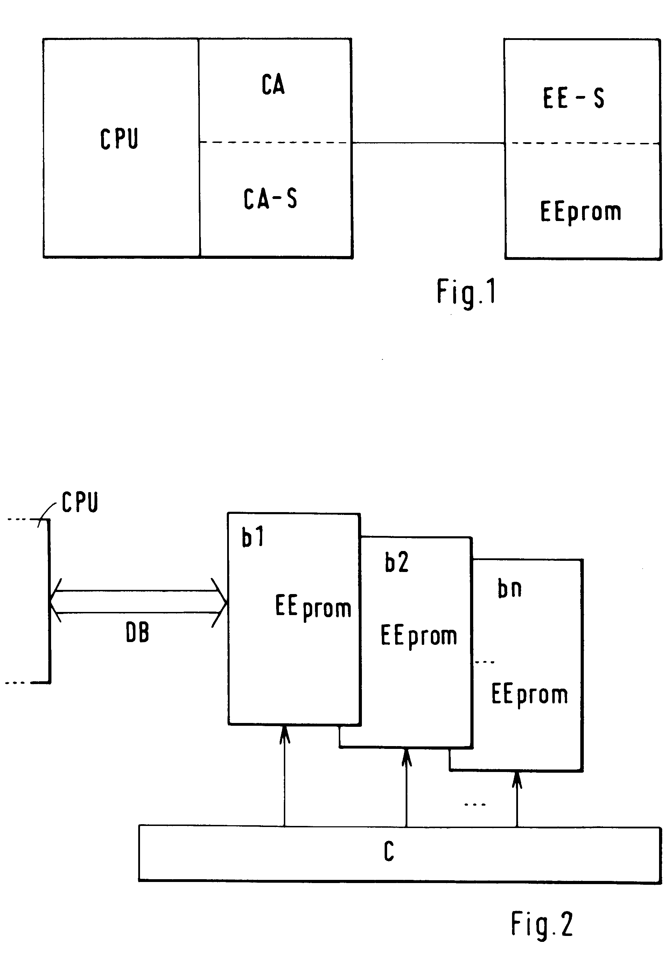

Im folgenden wird ein Rechner gemäß Patentanspruch 1 anhand von Figur 1 näher erläutert.

Ein Rechner ist mit einer zentralen Rechnereinheit CPU zum Verarbeiten von Daten ausgestattet. Dieser zentralen Prozessoreinheit CPU ist ein Cache-Speicher CA zugeordnet. Ein Cache-Speicher ist ein Pufferspeicher, der zwischen einem Arbeitsspeicher und den restlichen Teilen einer zentralen Prozessoreinheit zum Verkürzen der Zugriffszeiten zum Arbeitsspeicher angeordnet ist. Zur Steuerung der Datenein- und ausgabe ist weiter eine Cache-Steuerung CA-S vorgesehen. Desweiteren besteht der Rechner aus weiteren Speichern, aus einem Hauptspeicher und aus einem Arbeitsspeicher. Der Hauptspeicher, der im allgemeinen als Plattenspeicher ausgebildet ist, dient zur Speicherung der gesamten Programme und Daten. In dem erfindungsgemäßen Rechner ist dieser Hauptspeicher als mindestens ein nichtflüchtiger, elektrisch löschbarer Halbleiterspeicher EEprom ausgebildet. Dieser Halbleiterspeicher EEprom dient ebenfalls als Arbeitsspeicher. Demgemäß entfällt ein getrennt vom Hauptspeicher angeordneter zusätzlicher Arbeitsspeicher. Dem Halbleiterspeicher ist zur Steuerung der Datenein- und ausgabe des mindestens einen Halbleiterspeichers EEprom eine Steuerung EE-S zugeordnet.

Ein Ausführungsbeispiel für einen solchen nichtflüchtigen, elektrisch löschbaren Halbleiterspeicher EEprom als Arbeitsspeicher und als Hauptspeicher ist ein, entsprechend seiner Architektur bezeichneter NAND-EEprom (NAND Elektrically Erasable and Programmable Read Only Memory). Da diese NAND-EEprom-Speicher in Segmente aufgeteilt sind, ist eine gleiche Speicherorganisation verwendbar, wie dies bei Hauptspeichern in Form von Plattenspeichern bekannt ist.

Bei der Verwendung eines solchen in Segmente aufgeteilten Halbleiterspeichers, könnte ein Speicherzugriff folgendermaßen ausgestaltet werden. Während aus einem Segment Daten ausgelesen werden und der zentralen Rechnereinheit zur Verarbeitung zugeführt werden, kann bereits in einem nächsten Segment selektiert werden.

Ein solcher Speicherzugriff ist auch dann von Vorteil, wenn mehrere Halbleiterspeicher eingesetzt werden. Hierbei kann, während aus einem ersten Halbleiterspeicher gelesen wird, bereits in einem nächsten selektiert werden

In besonders vorteilhafter Weise kann dies dazu führen, daß der Cache-Speicher ebenfalls in dem Halbleiterspeicher vorgesehen werden kann, weshalb dann auch eine eigene Steuerung für den Cache-Speicher entfällt und alle Speicher in einem einzigen Halbleiterspeicher vorgesehen sind.

Ein weiteres Beispiel eines Halbleiterspeichers ist ein NOR-EEprom (mit einer zu NAND-EEproms verschiedenen Architektur), oder aber ein FLASH-EEprom. FLASH-EEproms besitzen die Eigenschaft mittels eines einfachen Steuersignals löschbar und direkt wieder beschreibbar zu sein. Ein solcher Flash-EEprom kann so aufgeteilt werden, daß ein Zwischenspeicher vorgesehen wird. Dies führt in vorteilhafter Weise dazu, daß gleichzeitig aus dem Zwischenspeicher der sich in dem Flash-EEprom befindet und dem Flash-EEprom an sich gelesen werden kann, was zu einer Erhöhung der Datentransferrate führt.

Im folgenden wird die Beschreibung einer beispielhaften Anschaltung eines NAND-EEproms an eine zentrale Prozessoreinheit CPU dargestellt. Hierbei ist beispielhaft der Toshiba NAND-EEprom TC 5816 FT/TR verwendet worden.

Derzeit bekannte NAND-EEproms verfügen über ca. 32 Mbit Speicherplatz. Die verfügbaren Halbleiterspeicher sind in Segmente unterteilt. Die Selektionszeit eines Segmentes beträgt weniger als 15 µs und die Zugriffszeit auf ein Datenbyte beträgt 80 ns.

Die Funktionsweise eines Rechners mit den Halbleiterspeichern gemäß Fig. 2 läßt sich folgendermaßen erklären. Es steht eine Anzahl an Halbleiterspeicherbausteinen EEprom zur Verfügung b1, b2 bis bn. Auf alle diese Segmente der Halbleiterbausteine wirkt eine Steuerung C, die die Datenein- und ausgabe steuert. Eine Datenübertragung zu einer zentralen Prozessoreinheit CPU erfolgt über einen Datenbus DB. Dieser Datenbus DB ist entweder ein 32 Bit Bus oder aber ein 64 Bit Bus. Entsprechend abhängig von dem verwendeten Datenbus DB wird eine unterschiedlich hohe Datentransferrate erreicht. Durch die Verwendung dieser Speicherelemente mit hohen Transferraten entfällt der Arbeitsspeicher. Entsprechend ist dieser Halbleiterspeicherbaustein direkt mit dem Cache-Speicher der zentralen Prozessoreinheit CPU verbunden. Programme und Daten werden direkt von dem nichtflüchtigen Halbleiterspeicher in den Cache-Speicher geladen und, falls eine Anforderung besteht, nachgeladen. Nach der Bearbeitung von Daten werden die nicht mehr benötigten bearbeiteten Daten in den nicht flüchtigen Halbleiterspeicher zurückgeschrieben.

Rechner, die nach dem System wie zuvor beschrieben arbeiten, finden hauptsächlich Anwendung für Video-On-Demand-Anwendungen und Multimediaendgeräte, da bei solchen Systemen hohe Plattentransferraten gefordert sind.

Eine weitere Verwendung eines Rechners ist in der Nebenstellentechnik zu sehen. Rechner werden in Nebenstellen eingesetzt, und eine Anforderung an Nebenstellenanlagen ist, daß bei einem Spannungsabfall möglichst viele Daten erhalten bleiben. Bei dem zuvor erläuterten neuen Rechnerkonzept mit den neuen Speichern ergibt sich somit in vorteilhafter Weise, daß eine größere Anzahl an Daten gespeichert bleibt, denn nicht wie bei üblichen Systemen mit Arbeitsspeichern gehen die Daten verloren, sondern lediglich die aktuell bearbeiteten Daten sind verloren. Dies sind aber weitaus weniger Daten als die im Arbeitsspeicher gespeicherten.

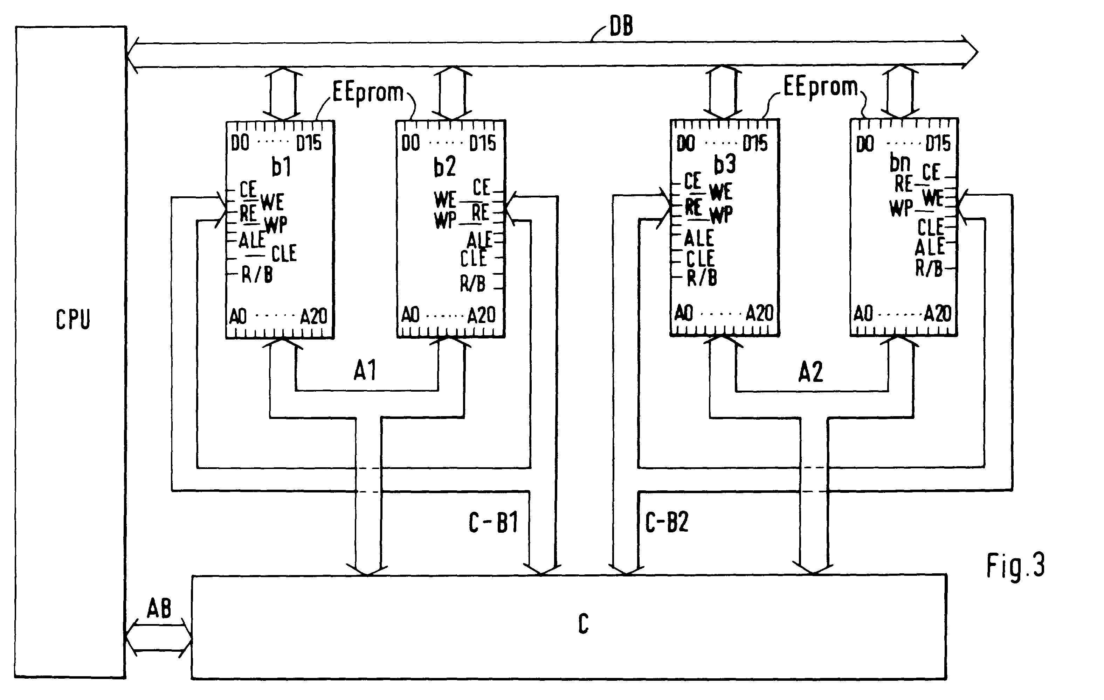

Im folgenden wird anhand von Fig. 3 eine mögliche Anschaltung mehrerer Halbleiterspeicherbausteine näher erläutert.

Ein Rechner besitzt eine zentrale Prozessoreinheit CPU. Zwischen der zentralen Prozessoreinheit CPU stellt ein Adreßbus AB eine Verbindung zu einer Steuerung C her. Desweiteren verbindet ein Datenbus DB die zentrale Prozessoreinheit CPU mit mindestens einem Halbleiterspeicher EEprom. Von dem Datenbus DB führen Verbindungen zu dem mindestens einen Halbleiterspeicher. In dem vorliegenden Beispiel sind vier Halbleiterspeicherelemente aufgeführt. Diese Halbleiterspeicher EE-S1, EE-S2, EE-S3 und EE-S4 sind beispielsweise NAND-EEproms. Von dem Datenbus DB aus ist eine Verbindung zu den Halbleiterspeichern über Datenanschlüsse D0 bis D15 hergestellt. Weiterhin besitzen die Halbleiterspeicher EE-S1 bis EE-S4 Adreßleitungen A0 bis A20. Über diese Adreßanschlüssen besteht eine Verbindung zu einer Steuerung C. Die Halbleiterspeicher sind jeweils paarweise zusammengefügt. Beispielsweise ist der erste Halbleiterspeicher EE-S1 und der zweite Halbleiterspeicher EE-S2 zusammen über einen ersten gemultiplexten Adreßbus A1 mit der Steuerung C verbunden. Der dritte Halbleiterspeicher EE-S3 und der vierte Halbleiterspeicher EE-S4 ist ebenfalls über die jeweiligen Adreßanschlüsse A0 bis A20 auf einen gemeinsamen, gemultiplexten Adreßbus A2 geführt. Der erste gemultiplexte Adreßbus A1 und der zweite gemultiplexte Adreßbus A2 führen jeweils auf die eine Steuerung C. Desweiteren existiert ein erster Steuerungsbus C-B1 und ein weiterer Kontrollbus C-B2 ausgehend von der Steuerung C. Der erste Kontrollbus C-B1 führt auf die wie bereits zuvor beschriebenen, ersten paarweise zusammengefaßten Halbleiterspeicher und steuert diese jeweils einzeln über Eingänge CE, RE, WE, WP, CLE, ALE, R/B an. Der zweite Kontrollbus C-B2 führt auf das zweite Paar von Halbleiterspeicherbausteinen und steuert diese jeweils einzeln an.

Hierbei ist es natürlich möglich weiter Speicherbausteine hinzuzufügen, die dann nach dem gleichen Prinzip angeschlossen werden.

## Patentansprüche

1. Rechner mit einer zentralen Prozessoreinheit (CPU) zum Verarbeiten von Daten, mit einem Cache-Speicher (CA) zum Zwischenspeichern der Daten, mit einer Cache-Steuerung (CA-S)zur Steuerung der Datenein- und ausgabe des Cache-Speichers (CA) **gekennzeichnet durch** mindestens einen nichtflüchtigen, in Segmente aufgeteilten elektrisch löschbaren Halbleiterspeicher (EEprom) als Speicher für die Daten, der die Funktion eines Arbeitsspeichers und eines Massenspeichers ausführt und der ein NAND-EEprom oder ein NOR-EEprom ist, und eine Steuerung (EE-S) zur Steuerung der Datenein- und ausgabe des mindestens einen Halbleiterspeichers.

2. Rechner nach Anspruch 1,
dadurch gekennzeichnet, daß der mindestens eine nichtflüchtige, elektrisch löschbare Halbleiterspeicher (EEprom) ein FLASH EEprom ist.

3. Verwendung eines Rechners nach Anspruch 1 in einer Nebenstellenanlage.

4. Verwendung eines Rechners nach Anspruch 1 in einem Multimediaendgerät.

5. Verwendung eines Rechners nach Anspruch 1 für Video-on-Demand Anwendungen.
